# DEMANDE DE BREVET EUROPEEN

(11) **EP 1 273 988 A2**
(43) Date de publication de la demande: **08.01.2003**
(21) Numéro de dépôt: 02291387.5
(22) Date de dépôt: 05.06.2002
(51) Int. Cl.: G05D 23/19

(54) **Procédé et appareil pour amener du vin ou un autre produit alimentaire à sa température préférentielle de consommation**

(30) Priorité: 18.06.2001 FR 0107983
(71) Demandeur: Ducourret, Paul, 78600 Maisons-Lafitte (FR)
(72) Inventeur: Ducourret, Paul, 78600 Maisons-Lafitte (FR)
(74) Mandataire: Habasque, Etienne Joel Jean-François

(57) **Abrégé**

L'invention concerne la mise à température du vin ou d'un autre produit alimentaire, au moyen d'un appareil simple aisément transportable.

Le produit, préalablement refroidi, est introduit dans une enceinte délimitée par le corps (1) et le couvercle (2) de l'appareil, l'enceinte est fermée, et si la température du produit repérée par une sonde électronique (6) trempée dans le produit est inférieure à une première valeur prédéterminée inférieure à la température préférentielle, un thermostat (8) alimente des moyens de chauffage (4, 5) de l'enceinte pour élever sa température jusqu'à la valeur prédéterminée ; lorsque cette valeur prédéterminée est atteinte, le chauffage est arrêté au moyen du thermostat.

L'invention peut être utilisée pour amener notamment du vin ou du foie gras préalablement refroidis, ou des glaces, à leur température préférentielle de consommation.

## Description

L'invention concerne le domaine du vin et autres produits alimentaires et analogues, et plus précisément, pour les produits de ce type pour lesquels il existe une température préférentielle de consommation, un procédé et un appareil pour amener la température du produit à une valeur la plus proche possible de cette température préférentielle de consommation.

De nombreux produits alimentaires nécessitent, pour que l'on puisse apprécier au mieux leurs qualités gustatives, d'être consommés à une température déterminée ou comprise dans une gamme de température déterminée. Cela est par exemple le cas des vins et plus généralement des boissons alcoolisées, de viandes telles que les foies gras, des entremets et des desserts, et des glaces.

Il est de manière générale difficile de faire en sorte que ces produits soient à leur température préférentielle ou idéale de dégustation, au moment de leur consommation.

L'invention a pour but de remédier à cet inconvénient au moyen d'un procédé pour amener au moyen d'un appareil portable la température d'un produit alimentaire éventuellement contenu dans un emballage et pour lequel il existe une température préférentielle de consommation, à une valeur proche de cette température préférentielle, procédé dans lequel la température du produit éventuellement contenu dans son emballage est préalablement portée à une valeur inférieure à la température préférentielle, caractérisé en ce que l'on introduit le produit éventuellement contenu dans son emballage, dans un espace interne d'une enceinte de l'appareil portable adaptée pour être fermée, on introduit une sonde électronique de repérage de température dans le produit, on ferme l'enceinte et si la température du produit est inférieure à une première valeur prédéterminée elle-même inférieure à la température préférentielle on chauffe l'espace interne de l'enceinte éventuellement par intermittence au moyen d'une première puissance électrique de manière à élever progressivement la température du produit jusqu'à la valeur prédéterminée, et lorsque cette valeur prédéterminée est atteinte le chauffage est arrêté de manière à approximativement stabiliser la température du produit à une valeur voisine de la température préférentielle.

Grâce au fait que l'on chauffe l'espace interne de l'enceinte, on élève progressivement la température du produit initialement relativement froid contenu dans l'enceinte, et le chauffage est arrêté avant d'atteindre la température préférentielle de consommation, on parvient à une bonne homogénéité de la température du produit, et le procédé peut être mis en oeuvre au moyen d'un appareil de conception simple, donc peu onéreux et susceptible d'être réalisé sous une forme portable.

Le procédé peut en outre comporter une ou plusieurs des caractéristiques suivantes :
- la première valeur prédéterminée est inférieure d'environ 1°C à la température préférentielle de consommation du produit ;
- si, lorsque l'on introduit le produit éventuellement contenu dans son emballage dans l'espace interne de l'enceinte, sa température est inférieure à une deuxième valeur prédéterminée elle-même inférieure à la première valeur prédéterminée, on chauffe l'espace interne de l'enceinte au moyen d'une puissance électrique supérieure à ladite première puissance électrique jusqu'à ce que la température du produit atteigne la deuxième valeur prédéterminée, et lorsque la température atteint cette deuxième valeur prédéterminée on diminue la puissance de chauffage pour atteindre ladite première puissance électrique, et on poursuit le chauffage avec ladite première puissance électrique de chauffage jusqu'à ce que la température du produit atteigne la première valeur prédéterminée, et enfin le chauffage est arrêté au moyen du thermostat lorsque la première valeur prédéterminée est atteinte ;
- si, lorsque l'on introduit le produit éventuellement contenu dans son emballage dans l'espace interne de l'enceinte, sa température est inférieure à une deuxième valeur prédéterminée elle-même inférieure à la première valeur prédéterminée, on chauffe l'espace interne de l'enceinte au moyen d'une puissance électrique supérieure à ladite première puissance électrique jusqu'à ce que la température du produit atteigne la deuxième valeur prédéterminée, et lorsque la température atteint cette deuxième valeur prédéterminée, le chauffage est interrompu au moyen du thermostat puis est repris mais avec une puissance de chauffage inférieure à la puissance initiale jusqu'à ce que la température du produit atteigne la première valeur prédéterminée, et enfin le chauffage est arrêté lorsque la première valeur prédéterminée est atteinte ;
- la deuxième valeur prédéterminée est inférieure d'environ 4°C à la température préférentielle de consommation du produit.

L'invention concerne également un appareil portable pour la mise en oeuvre du procédé ci-dessus, caractérisé en ce qu'il comporte un boîtier en matériau bon isolant thermique comprenant un corps et un couvercle présentant des parois intérieures délimitant l'espace interne d'une enceinte de chauffage, des moyens de chauffage électrique comprenant au moins une résistance électrique logée dans le boîtier, un dispositif thermostatique comprenant une sonde électronique de repérage de température adaptée pour être mise en contact du produit et un thermostat à deux seuils de contacts relié électriquement à la sonde, et des moyens de visualisation comprenant au moins un organe de visualisation adapté pour fournir une information de température du produit.

Grâce au fait que l'espace interne de l'enceinte est délimité par un corps de boîtier et un couvercle, cet espace interne est adapté pour être fermé, et grâce au dispositif thermostatique et aux moyens de visualisation, la température du produit contenu dans cet espace interne peut être contrôlée avec précision.

L'appareil peut en outre présenter une ou plusieurs des caractéristiques suivantes :
- il comporte au moins un réceptacle en matériau présentant une faible inertie thermique adapté pour recevoir le produit éventuellement contenu dans son emballage ;
- les moyens de chauffage électrique comprennent deux résistances de puissances différentes ;
- le fond du corps comporte des nervures définissant des passages de circulation d'air.

D'autres caractéristiques et avantages de l'invention ressortiront de la description qui va suivre, d'un mode et d'une forme de réalisation de cette invention illustrés par les dessins joints dans lesquels :
- la figure 1 est une coupe schématique longitudinale d'un appareil selon l'invention renfermant un produit alimentaire liquide contenu dans un emballage constitué par une bouteille en verre, et
- la figure 2 est une vue schématique de dessus du corps du boîtier de l'appareil de la figure 1.

Compte tenu du fait qu'il est facile de refroidir les produits alimentaires et analogues en dessous de leur température préférentielle de consommation, par différents moyens, l'invention se propose d'amener un produit alimentaire à sa température préférentielle de consommation par un réchauffage consécutif à un refroidissement.

Pour éviter, après le début du chauffage conformément à l'invention, toute nécessité de refroidissement du produit par des moyens autres que naturels, il est nécessaire de pouvoir contrôler avec précision la montée en température du produit, et stabiliser cette température à une valeur choisie.

Les figures montrent un appareil répondant à ces impératifs.

Cet appareil comporte un boîtier substantiellement isotherme comprenant un corps 1 et un couvercle 2 en matériau bon isolant thermique, présentant des parois intérieures délimitant l'espace interne d'une enceinte de chauffage. L'appareil pris à titre d'exemple étant destiné à amener du vin contenu dans une bouteille à sa température préférentielle de consommation, la forme du boîtier est approximativement cylindrique.

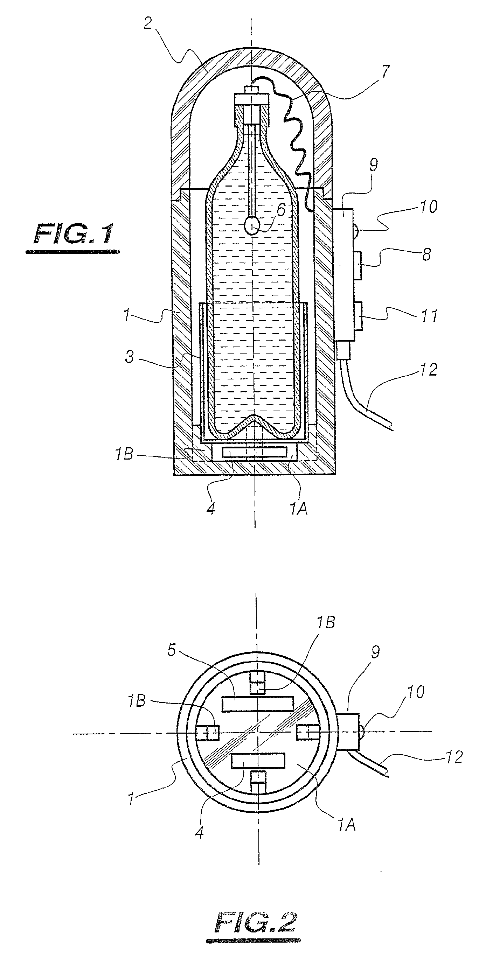

Le corps 1 comporte un fond sur lequel repose un réceptacle 3 en tôle métallique (non représenté sur la figure 2) destiné à recevoir le produit éventuellement dans son emballage ; ici, ce réceptacle est un pot cylindrique adapté pour recevoir la partie inférieure de la bouteille.

Le fond du corps 1 présente un logement 1A dans lequel sont logées deux résistances électriques chauffantes 4,5 de valeurs ohmiques suffisamment différentes pour que les puissances qu'elles dissipent soient notablement différentes.

La partie du fond sur laquelle repose le réceptacle 3 est constituée par le sommet de nervures 1B en saillie radiale dans le logement 1A vers le centre de celui-ci, définissant des passages pour l'air de telle manière que de l'air puisse circuler notamment dans le logement 1A. Ces nervures sont ici au nombre de quatre.

L'alimentation des résistances 4,5 est commandée par un dispositif thermostatique comportant une sonde électronique de contrôle de température 6 adaptée pour être introduite dans le produit alimentaire, ici pour tremper dans le vin. La sonde 6 est reliée par des conducteurs électriques isolés logés dans un cordon souple 7, à un thermostat 8 réglable à une température désirée et comportant de préférence deux seuils de déclenchement définissant des régimes de fonctionnement de l'appareil qui seront expliqués dans la suite.

Le thermostat 8 est porté par un tableau 9 fixé au corps 1 à l'extérieur de celui-ci. Le tableau 9 porte également des moyens de visualisation tels qu'un voyant lumineux 10 branché pour signaler que le produit alimentaire est à la température désirée et un afficheur alphanumérique 11 branché pour indiquer la température du produit fournie par la sonde 6. Dans le tableau 9, est branché un cordon d'alimentation électrique 12 adapté pour être relié à un réseau d'alimentation électrique par exemple fournissant une tension alternative de 220 volts ; en variante, il est possible de prévoir une alimentation par batterie d'accumulateurs rechargeable. L'appareil comporte également des moyens de temporisation (non représentés) dont le rôle sera expliqué par la suite.

Le réceptacle 3 a pour but de transmettre rapidement la chaleur produite par les résistances 4,5 au produit alimentaire via son emballage, ici la bouteille en verre. Les résistances et le réceptacle doivent donc avoir une faible inertie thermique.

Comme on l'a vu, le thermostat 8 est muni de deux seuils de déclenchement, par exemple, si tp désigne la température préférentielle de consommation affichée sur le thermostat, un seuil à une température tp-1 et un seuil à une température tp-4 en degrés Celsius.

Le procédé de mise en oeuvre de l'appareil est le suivant :

La bouteille contenant le vin à amener à sa température préférentielle de consommation tp est tout d'abord amenée à une température inférieure à cette température préférentielle de telle manière que le vin lui-même soit à une température inférieure à la température préférentielle, et le thermostat 8 de l'appareil est réglé à la température préférentielle.

Puis on débouche la bouteille, on introduit cette bouteille dans le corps 1 de l'appareil et plus précisément dans le réceptacle 3, et la sonde dans le goulot de la bouteille de manière qu'elle soit au moins partiellement immergée dans le vin. Après quoi on met le couvercle 2 en place sur le corps 1 de manière que l'enceinte soit fermée et qu'ainsi son espace interne soit confiné, et on met l'appareil sous tension de telle sorte que l'espace interne de l'enceinte puisse être chauffé au moyen des résistances 4,5, éventuellement par intermittence, de manière à élever progressivement la température du vin.

Si toutefois, la température du vin est alors égale ou supérieure à la première valeur prédéterminée tp-1, aucune résistance chauffante n'est alimentée, ou l'alimentation est arrêtée immédiatement, et le voyant 10 s'allume pour signaler que le vin est prêt à être consommé.

Si la température est comprise entre tp-1 et tp-4 (deuxième valeur prédéterminée), la résistance chauffante développant la plus faible puissance est alimentée tandis que le voyant 10 est éteint. Quand la température du vin atteint tp-1, l'alimentation de la résistance est arrêtée et le voyant 10 est illuminé pour signaler que le vin est prêt à être consommé. Si la bouteille n'est pas retirée de l'appareil, comme le boîtier est isotherme, la température du vin est approximativement stabilisée à une valeur voisine de la température préférentielle de consommation, et la stabilisation peut durer plusieurs heures.

Si la température initiale du vin est inférieure à tp-4, la résistance chauffante développant la plus forte puissance est alimentée tandis que le voyant 10 est éteint. Quand la température du vin atteint tp-4, l'alimentation de cette résistance est interrompue et, soit simultanément, soit, avantageusement, après un délai réglé par les moyens de temporisation, pouvant atteindre plusieurs minutes, pour laisser se parfaire l'équilibre thermique entre le verre de la bouteille et le vin, on chauffe à nouveau l'espace interne de l'enceinte, mais au moyen de la résistance développant la plus faible puissance, jusqu'à ce que la température du produit atteigne la première valeur prédéterminée (on est ramené au cas précédent), et enfin le chauffage est arrêté par le thermostat quand la première valeur prédéterminée est atteinte.

Il est clair que plus la température initiale est proche de la valeur préférentielle de consommation, plus cette valeur est atteinte rapidement.

Bien entendu, l'invention n'est pas limitée au mode et la forme de réalisation ci-dessus décrits et représentés, et on pourra en prévoir d'autres sans sortir de son cadre.

Notamment, l'appareil qui vient d'être décrit peut être réalisé pour pouvoir contenir plusieurs bouteilles par exemple au moyen de plusieurs réceptacles; on remarquera que pour une seule bouteille, il est moins encombrant qu'un seau à glace, et, étant isotherme, peut être débranché après obtention de la température préférentielle de consommation, et placé sur une table.

Un tel appareil peut être utilisé notamment dans les restaurants où le vin est conservé en armoire réfrigérée, dans les clubs oenologiques, dans les caves viticoles de dégustation, ou encore en pique-nique (au moyen d'une alimentation sur batterie d'accumulateurs) ; étant isotherme, il peut en outre être utilisé sans être alimenté électriquement, simplement pour conserver les aliments à leur température initiale.

Il est possible de réaliser des appareils selon l'invention particulièrement adaptés pour décongeler des glaces alimentaires et arrêter leur réchauffement au moment le plus opportun pour pouvoir les consommer à leur température idéale de consommation. Un tel appareil peut être par exemple réalisé en adjoignant à un appareil prévu pour plusieurs bouteilles, un plateau adaptable sur les réceptacles pour les bouteilles, la sonde de température étant enfoncée dans la glace après avoir pratiqué dans celle-ci un trou au moyen d'un couteau pointu.

Il est également possible d'utiliser un tel appareil pour la mise en température et le maintien à cette température de foies gras et autres produits à consommer à une température précise.

Grâce au fait que l'appareil selon l'invention ne nécessite que des résistances de faible puissance et consommant peu de courant électrique, que le nombre de ses composants est faible, et que sa conception est simple, il peut être fabriqué à peu de frais, d'une utilisation peu coûteuse, et présenter une bonne fiabilité.

## Revendications

1. Procédé pour amener au moyen d'un appareil portable la température d'un produit alimentaire éventuellement contenu dans un emballage et pour lequel il existe une température préférentielle de consommation, à une valeur proche de cette température préférentielle, procédé dans lequel la température du produit éventuellement contenu dans son emballage est préalablement portée à une valeur inférieure à la température préférentielle, **caractérisé en ce que** l'on introduit le produit éventuellement contenu dans son emballage, dans un espace interne d'une enceinte de l'appareil portable adaptée pour être fermée, on introduit une sonde électronique (6) de repérage de température dans le produit, on ferme l'enceinte et si la température du produit est inférieure à une première valeur prédéterminée elle-même inférieure à la température préférentielle on chauffe l'espace interne de l'enceinte éventuellement par intermittence au moyen d'une première puissance électrique de manière à élever progressivement la température du produit jusqu'à la valeur prédéterminée, et lorsque cette valeur prédéterminée est atteinte le chauffage est arrêté de manière à approximativement stabiliser la température du produit à une valeur voisine de la température préférentielle.

2. Procédé selon la revendication 1, **caractérisé en ce que** la première valeur prédéterminée est inférieure d'environ 1°C à la température préférentielle de consommation du produit.

3. Procédé selon l'une quelconque des revendications 1 et 2, **caractérisé en ce que**, si lorsque l'on introduit le produit éventuellement contenu dans son emballage dans l'espace interne de l'enceinte, sa température est inférieure à une deuxième valeur prédéterminée elle-même inférieure à la première valeur prédéterminée, on chauffe l'espace interne de l'enceinte au moyen d'une puissance électrique supérieure à ladite première puissance électrique jusqu'à ce que la température du produit atteigne la deuxième valeur prédéterminée, et lorsque la température atteint cette deuxième valeur prédéterminée on diminue la puissance de chauffage pour atteindre ladite première puissance électrique, et on poursuit le chauffage avec ladite première puissance électrique de chauffage jusqu'à ce que la température du produit atteigne la première valeur prédéterminée, et enfin le chauffage est arrêté au moyen du thermostat lorsque la première valeur prédéterminée est atteinte.

4. Procédé selon l'une quelconque des revendications 1 à 3, **caractérisé en ce que**, si lorsque l'on introduit le produit éventuellement contenu dans son emballage dans l'espace interne de l'enceinte, sa température est inférieure à une deuxième valeur prédéterminée elle-même inférieure à la première valeur prédéterminée, on chauffe l'espace interne de l'enceinte au moyen d'une puissance électrique supérieure à ladite première puissance électrique jusqu'à ce que la température du produit atteigne la deuxième valeur prédéterminée, et lorsque la température atteint cette deuxième valeur prédéterminée, le chauffage est interrompu au moyen du thermostat puis est repris mais avec une puissance de chauffage inférieure à la puissance initiale jusqu'à ce que la température du produit atteigne la première valeur prédéterminée, et enfin le chauffage est arrêté lorsque la première valeur prédéterminée est atteinte.

5. Procédé selon l'une quelconque des revendications 3 et 4, **caractérisé en ce que** la deuxième valeur prédéterminée est inférieure d'environ 4°C à la température préférentielle de consommation du produit.

6. Appareil portable pour la mise en oeuvre du procédé selon l'une quelconque des revendications 1 à 5, **caractérisé en ce qu'**il comporte un boîtier en matériau bon isolant thermique comprenant un corps (1) et un couvercle (2) présentant des parois intérieures délimitant l'espace interne d'une enceinte de chauffage, des moyens de chauffage électrique (4,5) comprenant au moins une résistance électrique logée dans le boîtier, un dispositif thermostatique comprenant une sonde électronique (6) de repérage de température adaptée pour être mise en contact du produit et un thermostat (8) à deux seuils de contacts relié électriquement à la sonde, et des moyens de visualisation (10,11) comprenant au moins un organe de visualisation adapté pour fournir une information de température du produit.

7. Appareil selon la revendication 6, **caractérisé en ce qu'**il comporte au moins un réceptacle (3) en matériau présentant une faible inertie thermique adapté pour recevoir le produit éventuellement contenu dans son emballage.

8. Appareil selon l'une quelconque des revendications 6 et 7, **caractérisé en ce que** les moyens de chauffage électrique comprennent deux résistances (4,5) de puissances différentes.

9. Appareil selon l'une quelconque des revendications 6 à 8, **caractérisé en ce que** le fond du corps (1) comporte des nervures (1B) définissant des passages de circulation d'air.
